Europäisches Patentamt

European Patent Office

Office européen des brevets

(11) Veröffentlichungsnummer: **0 135 602**
**A1**

## (12) EUROPÄISCHE PATENTANMELDUNG

(21) Anmeldenummer: 83109556.7

(22) Anmeldetag: 26.09.83

(51) Int. Cl.⁴: **F 16 L 23/00**

(43) Veröffentlichungstag der Anmeldung: 03.04.85
**Patentblatt 85/14**

(84) Benannte Vertragsstaaten: **AT BE CH DE FR GB IT LI LU NL SE**

(71) Anmelder: **Lovent AG, Büchstrasse 17, CH-8645 Jona (CH)**

(72) Erfinder: **Lonoce, Cosimo, Büchstrasse 17, CH-8645 Jona (CH)**

(74) Vertreter: **Patentanwaltsbureau Scheidegger, Zwicky & Co., Stampfenbachstrasse 48 Postfach, CH-8023 Zürich (CH)**

(54) **An einem Blechteil anbringbares Profilstück.**

㊗ Das im Querschnitt L-förmige Profilstück (10) weist einen ersten Schenkel (1) und einen dazu etwa rechtwinklig stehenden zweiten Schenkel (12) auf. Der erste Schenkel (11) ist zum Befestigen an einem Blechteil (20) bestimmt und weist zu diesem Zweck eine in Richtung dieses Schenkels verlaufende Tasche (13) auf, deren Mündung (14) bei dem Scheitel (15) zwischen den beiden Schenkeln (11, 12) des Profilstückes (10) liegt. Eine Endpartie (21) des Blechteiles (20) wird um 180° zurückgeschlagen und in die Tasche (13) des Profilstückes (10) eingesetzt, so dass der erste Schenkel (11) des Profilstückes (10) etwa parallel zum Blechteil (20) zu liegen kommt und der zweite Schenkel (12) einen Endflansch am Blechteil bildet.

Zum Erstellen einer Stoßverbindung von zwei Blechteilen (20, 20') werden die miteinander zu verbindenden Enden der Blechteile je mit einem Profilstück (10, 10') versehen und nachher die als Endflansche dienenden zweiten Schenkel (12, 12') der zwei Profilstücke (10, 10') miteinander verbunden. Die Profilstücke (10, 10') sind insbesondere zum Verbinden von Lüftungskanalabschnitten aus Blech geeignet.

ACTORUM AG

0135602

Lovent AG                     - 1 -

## An einem Blechteil anbringbares Profilstück

Die vorliegende Erfindung betrifft ein Profilstück zum Anbringen an einem Ende eines Blechteiles zwecks Bildung eines
Endflansches, der eine Stossverbindung mit einem analogen
Endflansch an einem zweiten Blechteil ermöglicht. Weiter betrifft die Erfindung ein mit einem solchen Blechstück versehenes Blechteil sowie eine Verwendung derartiger Profilstücke zum lösbaren Verbinden von aus Blechmaterial gebildeten Kanalabschnitten, insbesondere von Lüftungskanälen.

Es ist bekannt, Lüftungskanalabschnitte, die aus winklig gebogenen Blechtafeln gebildet sind, miteinander mittels Profilstücken zu verbinden, die je an einer Endpartie der Kanalwände befestigt werden und so ausgebildet sind, dass sie an
den Kanalabschnitten Endflansche bilden, welche aneinandergestossen und durch Klammern oder auf andere Weise miteinander
verbunden werden. Es ist ferner bekannt, die erwähnten Profilstücke im Querschnitt etwa L-förmig auszubilden mit einem
am Kanalabschnitt zu befestigenden ersten Schenkel und einem
dazu etwa rechtwinklig stehenden zweiten Schenkel, der dazu
bestimmt ist, den Endflansch zu bilden. Im ersten Schenkel
des Profilstückes ist eine sich in Richtung dieses Schenkels
erstreckende Tasche zur Aufnahme der Endpartie einer Kanalwand vorgesehen, wobei gemäss dem Stand der Technik die Mündung dieser Tasche sich bei dem äussersten Ende des ersten
Schenkels befindet. Um ein Abgleiten der Profilstücke von den
Kanalwänden zu verhindern, hat man den ersten Schenkel jedes
Profilstückes durch Punktschweissung oder Vernietung od.dgl.
an der betreffenden Kanalwand befestigt und nachher die
Schweiss- oder Nietstellen zum Korrosionsschutz mit Zinkfarbe
überdeckt.

Der vorliegenden Erfindung liegt nun die Aufgabe zugrunde, ein Profilstück gemäss dem Oberbegriff des Anspruches 1 derart auszugestalten, dass es an der Endpartie eines Blechteiles ohne Schweissung oder Nietung od.dgl. auf einfache Weise befestigbar ist, ohne dass die Gefahr des Abgleitens von dem Blechteil besteht, nachdem eine Stossverbindung von zwei je mit einem solchen Profilstück versehenen Blechteilen hergestellt worden ist.

Diese Aufgabe ist durch die Schaffung eines Profilstückes gelöst, bei welchem erfindungsgemäss die zur Aufnahme der Endpartie eines Blechteiles dienende Tasche im ersten Schenkel des Profilstückes eine bei dem Scheitel zwischen dem ersten und dem zweiten Schenkel des Profilstückes liegende Mündung aufweist.

Das mit dem erfindungsgemässen Profilstück zu verbindende Blechteil weist eine um 180$^{o}$ zurückgeschlagene Endpartie auf, welche in die Tasche im ersten Schenkel des Profilstückes einzusetzen ist.

Wenn zwei in dieser Weise ausgestaltete Blechteile, deren um 180$^{o}$ zurückgeschlagene Endpartien je in die Tasche eines erfindungsgemässen Profilstückes eingesetzt sind, miteinander verbunden werden, indem die je einen Flansch bildenden zweiten Schenkel der Profilstücke aneinandergelegt und auf bekannte Weise aneinander gesichert werden, wird ein fester Halt der Profilstücke an den Blechteilen ohne weiteres Dazutun erzielt.

In weiterer Ausgestaltung kann das erfindungsgemässe Profilstück im Innern der Tasche eine von der Mündung weg gerichtete Anschlagfläche aufweisen, und die zurückgeschlagene Endpartie des Blechteiles kann mit in Abständen voneinander angeordneten Nocken versehen sein, welche gegen die Anschlagfläche im Innern der Tasche im ersten Schenkel des Profilstückes anliegen, wenn die zurückgeschlagene Endpartie des Blechteiles in die Tasche des Profilstückes eingesetzt ist. Hierdurch wird das Profilstück auch gegen Abgleiten vom Blechteil gesichert, wenn die Stossverbindung von zwei mit Profilstücken versehenen Blechteilen noch nicht erstellt worden ist.

Die erfindungsgemässen Profilstücke lassen sich vorzüglich zum lösbaren Verbinden von aus Blechmaterial gebildeten Kanalabschnitten, insbesondere von Lüftungskanälen, verwenden. Hierbei wird an jedem der zu verbindenden Kanalabschnitte eine Endpartie jeder Kanalwand um 180° nach aussen zurückgeschlagen und in die Tasche im ersten Schenkel eines der Profilstücke eingeschoben, wonach die mit den Profilstücken versehenen Kanalabschnitte stumpf aneinandergefügt und die durch den zweiten Schenkel der Profilstücke gebildeten Flansche paarweise miteinander verbunden werden.

Zweckmässig werden an den um 180° zurückgeschlagenen Endpartien der Kanalwände jeweils mehrere in Abständen voneinander angeordnete Nocken angeprägt, die an einer im Innern der Tasche im ersten Schenkel jedes Profilstückes vorhandene, von der Mündung der Tasche weg gerichteten Anschlagfläche zur Anlage gebracht werden, bevor die Stossverbindung von zwei Kanalabschnitten erstellt wird.

Weil - wie bereits erwähnt - durch die Erfindung die Notwendigkeit einer Schweiss- oder Nietverbindung od.dgl. zwischen dem Profilstück und der in die Tasche im ersten Schenkel des Profilstückes eingesetzten Endpartie eines Blechteiles entfällt, sind die mit solchen Schweiss- oder Nietverbindungen od.dgl. einhergehenden Arbeitsgänge und technischen Nachteile beseitigt. Es besteht keine Korrosionsgefahr von Schweiss- oder Nietstellen. Die von dem als Verbindungsflansch dienenden zweiten Schenkel des Profilstückes abgewandte Seite des Blechteiles bleibt völlig glatt, so dass im Falle von Lüftungskanälen keine Flugfasern an Schweiss- oder Nietstellen
hängen bleiben können. Die Blechteile und die Profilstücke
können gegebenenfalls aus schwer oder nicht verschweissbaren
Werkstoffen bestehen. Es ist möglich, die Profilstücke erst
am Ort der Montage mit den Blechteilen zu verbinden, wodurch
der Transport vereinfacht und Transportvolumen eingespart
wird.

Weitere Einzelheiten und Vorteile der Erfindung ergeben sich
aus der nun folgenden Beschreibung von Ausführungsbeispielen
und aus den zugehörigen Zeichnungen, in denen die Erfindung
rein bespielsweise veranschaulicht ist.

Fig. 1 zeigt ein erstes Ausführungsbeispiel eines erfindungsgemässen Profilstückes in Ansicht auf eine seiner Endflächen;

Fig. 2 stellt eine analoge Ansicht eines Blechteiles dar, das
zum Anbringen des Profilstückes nach Fig. 1 vorbereitet ist;

Fig. 3 ist eine Draufsicht auf das Blechteil nach Fig. 2;

Fig. 4 zeigt einen Schnitt nach der Linie IV-IV in Fig. 3;

Fig. 5 zeigt einen Schnitt durch eine Stossverbindung von
zwei gemäss den Fig. 2 bis 4 vorbereiteten Blechteilen, die z.B. Wände von Lüftungskanalabschnitten sein
können und je mit einem die Stossverbindung ermöglichenden Profilstück gemäss Fig. 1 versehen sind;

Fig. 6 ist eine zu Fig. 1 analoge Darstellung eines zweiten
Ausführungsbeispieles des erfindungsgemässen Profilstückes;

Fig. 7 zeigt in analoger Darstellung ein drittes Ausführungsbeispiel des Profilstückes gemäss der Erfindung.

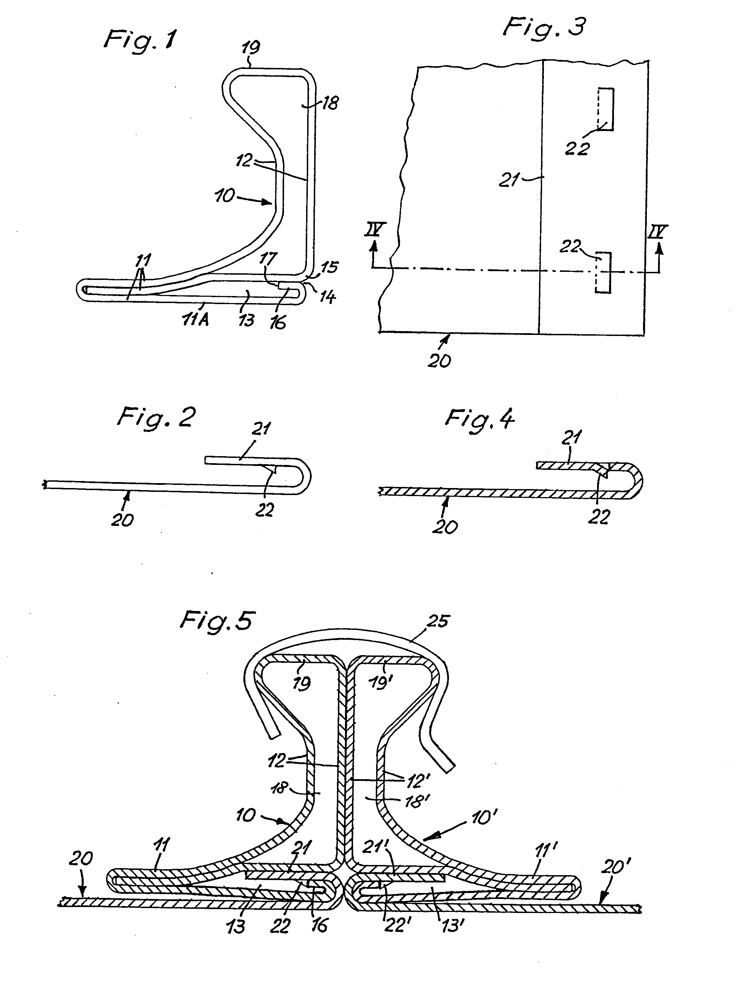

Das in Fig. 1 veranschaulichte Profilstück 10 weist einen
etwa L-förmigen Querschnitt mit einem ersten Schenkel 11 und
einem dazu etwa rechtwinklig stehenden zweiten Schenkel 12
auf. Im ersten Schenkel 11 ist eine Tasche 13 ausgebildet,
deren Mündung 14 sich bei dem Scheitel 15 zwischen dem ersten
Schenkel 11 und dem zweiten Schenkel 12 befindet. Der vom
zweiten Schenkel 12 entferntere Begrenzungsteil 11A der Tasche 13 weist bei der Mündung 14 einen nach innen gerichteten Umschlag 16 auf, dessen Ende im Innern der Tasche 13 eine
von der Mündung 14 weg gerichtete Anschlagfläche 17 bildet.Der
erwähnte Begrenzungsteil 11A ist federnd ausgebildet und hat
die Tendenz, die Mündung 14 zu schliessen. Der zweite Schenkel 12 des Profilstückes 10 weist einen Hohlraum 18 auf und
ist an seinem vom Scheitel 15 abgewandten Ende 19 wulstartig
verbreitert. Das beschriebene Profilstück 10 ist aus einem
einzigen Materialstück, z.B. aus Blechmaterial, geformt.

Das Profilstück 10 ist dazu bestimmt, mit seinem ersten Schenkel 11 an einem Blechteil 20 (Fig. 2 bis 4) befestigt zu
werden. Das Blechteil 20 weist eine um 180° zurückgeschlagene
Endpartie 21 auf, die zum Einsetzen in die Tasche 13 im
ersten Schenkel 11 des Profilstückes 10 vorgesehen ist. An
der zurückgeschlagenen Endpartie 21 sind mehrere in Abständen voneinander angeordnete Nocken 22 angeprägt, die nach
innen vorspringen. Zum Befestigen des Profilstückes 10 am
Blechteil 20 wird die um 180° zurückgeschlagene Endpartie 21
des Blechteiles 20 in die Tasche 13 im ersten Schenkel 11 des
Profilstückes 10 eingesetzt, was durch Einschieben der Endpartie 21 in die Mündung 14 erfolgen kann, wobei schliesslich
die Nocken 22 der Endpartie 21 mit der Anschlagfläche 17
im Innern der Tasche 13 zur Anlage gelangen. Die Nocken 22
und die Anschlagfläche 17 verhindern ein Herausgleiten der
zurückgeschlagenen Endpartie 21 aus der Mündung 14 der Tasche 13. In der linken Hälfte der Fig. 5 ist das mit dem
Profilstück 10 versehene Blechteil 20 gezeigt. Man erkennt,
dass der erste Schenkel 11 des Profilstückes 10 etwa parallel zum Blechteil 20 verläuft und der zweite Schenkel 12 einen
Endflansch am Blechteil 20 bildet.

In der rechten Hälfte der Fig. 5 ist ein gleich ausgebildetes,
aber spiegelbildlich angeordnetes zweites Profilstück 10' gezeigt, das an einem zweiten Blechteil 20' befestigt ist. Die
beiden Blechteile 20 und 20' sind stumpf aneinandergestossen,
und die als Flansche dienenden Schenkel 12 und 12' der Profilstücke 10 und 10' liegen parallel verlaufend aneinander
an. Durch mehrere die wulstartig verbreiterten Enden 19 und
19' der Schenkel 12 und 12' überspannende Klammern 25 sind
die Profilstücke 10 und 10' zusammengehalten, womit auch die
Blechteile 20 und 20' in bezug aufeinander festgehalten sind.
Anstelle der Klammern 25 können Klemmvorrichtungen nach Art
von Schraubenzwingen vorhanden sein.

Es ist ersichtlich, dass bei der beschriebenen und in Fig. 5
dargestellten Stossverbindung der zwei Blechteile 20 und 20'
irgendwelche zusätzliche Befestigungen, z.B. durch Schweissung oder Nietung, der Schenkel 11 und 11' der Profilstücke
10 und 10' mit den Blechteilen 20 und 20' völlig entbehrlich
sind. Die Blechteile 20 und 20' können sich weder gegeneinander noch voneinander weg bewegen.

Wie bereits erwähnt, können die Blechteile 20 und 20' Wände
von aus winklig gebogenen Blechtafeln gebildeten Kanalabschnitten sein, die mittels Profilstücken 10 und 10' miteinander lösbar verbunden sind. Solche Kanalabschnitte haben vorzugsweise rechteckigen oder quadratischen Querschnitt, wobei
an den miteinander zu verbindenden Enden der Kanalabschnitte
aller vier Wände je mit einem Profilstück 10 bzw. 10' in der
beschriebenen Weise versehen wird, indem die Profilstücke auf
um 180° zurückgeschlagene Endpartien 21 bzw. 21' der Kanalwände aufgeschoben werden. Die Länge eines jeden Profilstückes 10 bzw. 10' ist zweckmässig gleich der in Umfangsrichtung des Kanalabschnittes gemessenen Breite der Kanalwand, welcher das betreffende Profilstück zugeordnet ist. In die
Hohlräume 18 und 18' der als Flansche dienenden Schenkel 12
der Profilstücke 10 und 10' können mit Vorteil die Schenkel
von Eckwinkelstücken eingesetzt werden, die paarweise miteinander verschraubt werden, um in bekannter Weise die einander entsprechenden Profilstücke 10 und 10' zusammenzuhalten.

Beim Betrachten der Fig. 5 ist erkennbar, dass die Nocken 22
an den um 180° zurückgeschlagenen Endpartien 21 und 21' der
miteinander zu verbindenden Blechteile 20 und 20' nicht zwingend erforderlich sind. Nachdem die Stossverbindung gemäss
Fig. 5 einmal erstellt ist, können nämlich die Endpartien 21
und 21' der Blechteile 20 und 20' ohnehin nicht mehr aus den
Taschen 13 und 13' in den Schenkeln 11 und 11' der Profilstücke 10 und 10' herausgleiten. Die Nocken 22 sind jedoch
zweckmässig, um ein Abgleiten der Profilstücke 10 und 10' von
den zurückgeschlagenen Endpartien 21 und 21' zu verhindern,
solange die Stossverbindung nach Fig. 5 noch nicht fertiggestellt ist. Demgemäss kann man auf die Nocken 22 dann verzichten, wenn die Profilstücke 10 und 10' erst am Montageort
mit den Blechteilen 20 und 20' verbunden werden. Wenn hingegen die Profilstücke 10 und 10' bereits an einem anderen Ort,
z.B. in einer Fabrikhalle, mit den Blechteilen 20 und 20' verbunden werden und nachher die mit den Profilstücken versehenen Blechteile an den Montageort zu transportieren sind, bieten die Nocken 22 eine hohe Sicherheit gegen unbeabsichtigtes
Abgleiten der Profilstücke von den Blechteilen beim Transport
zum Montageort.

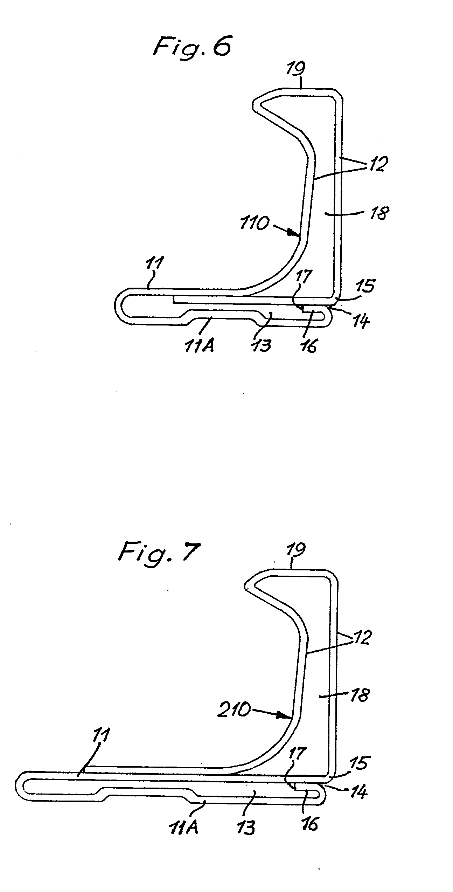

Die in den Fig. 6 und 7 gezeigten weiteren Ausführungsbeispiele von Profilstücken 110 und 210 unterscheiden sich von
dem mit Bezug auf Fig. 1 beschriebenen Profilstück 10 lediglich durch etwas andere Formgebungen und Falzungen. Grundsätzlich gilt alles, was bezüglich des Profilstückes 10 gesagt worden ist, auch für die Ausführungsarten gemäss den
Fig. 6 und 7. Auch die Verwendung zum Verbinden von Blechteilen oder Kanalabschnitten ist völlig gleich wie oben beschrieben.

0135602

Die vorstehend erläuterte Erfindung bietet gegenüber dem Stand der Technik eine Reihe von Vorteilen:

Durch den Wegfall von Schweiss- oder Nietverbindungen od.dgl. zwischen den Profilstücken 10, 10', 110, 210 und den Blechteilen 20, 20' ist nicht nur die Arbeitsweise vereinfacht, sondern auch die Gefahr von Korrosion an den Befestigungsstellen behoben und zudem ermöglicht, die Profilstücke erst am Montageort auf einfache Weise mit den Blechteilen zu verbinden. Ferner ergibt sich ein besseres Aussehen und im Falle von Kanalabschnitten eine von Schweisspunkten oder Nietköpfen freie, glatte Innenwandfläche, wodurch das Hängenbleiben von Flugfasern vermieden ist, was sich besonders bei Lüftungskanälen in Textilbetrieben vorteilhaft auswirkt. Schliesslich ist auch die Möglichkeit gegeben, die Profilstücke und die Blechteile aus unterschiedlichen Werkstoffen herzustellen, die nur schwer oder gar nicht miteinander verschweissbar sind.

0135602

Patentansprüche

1. An einem Ende eines Blechteiles anbringbares Profilstück für die Bildung eines Endflansches, der eine Stossverbindung mit einem analogen Endflansch an einem zweiten Blechteil ermöglicht, welches Profilstück (10) einen etwa L-förmigen Querschnitt mit einem am Blechstück (20) zu befestigenden ersten Schenkel (11) und einem dazu etwa rechtwinklig stehenden zweiten Schenkel (12) aufweist, der dazu bestimmt ist, den Endflansch zu bilden, wobei im ersten Schenkel (11) des Profilstückes eine sich in Richtung dieses Schenkels erstreckende Tasche (13) zur Aufnahme einer Endpartie (21) des Blechteiles (20) ausgebildet ist, dadurch gekennzeichnet, dass die Tasche (13) eine bei dem Scheitel (15) zwischen dem ersten Schenkel (11) und dem zweiten Schenkel (12) des Profilstückes (10) liegende Mündung (14) aufweist.

2. Profilstück nach Anspruch 1, dadurch gekennzeichnet, dass der vom zweiten Schenkel (12) entferntere Begrenzungsteil (11A) der Tasche (13) elastisch nachgiebig ist und die Tendenz hat, die Mündung (14) zu schliessen.

3. Profilstück nach Anspruch 1 oder 2, dadurch gekennzeichnet, dass im Innern der Tasche (13) eine von der Mündung (14) weg gerichtete Anschlagfläche (17) vorhanden ist.

4. Profilstück nach Anspruch 3, dadurch gekennzeichnet, dass es aus Blechmaterial gefalzt ist und der vom zweiten Schenkel (12) entferntere Begrenzungsteil (11A) der Tasche (13) einen nach innen gerichteten Umschlag (16) aufweist, dessen Ende die Anschlagfläche (17) bildet.

5. Mit einem Profilstück nach Anspruch 1 versehenes Blechteil, dadurch gekennzeichnet, dass das Blechteil (20) eine um 180° zurückgeschlagene Endpartie (21) aufweist, die in die Tasche (13) im ersten Schenkel (11) des Profilstückes (10) eingesetzt ist.

6. Blechstück nach Anspruch 5, dadurch gekennzeichnet, dass das Profilstück (10) nach Anspruch 3 oder 4 ausgebildet ist und die zurückgeschlagene Endpartie (21) des Blechteiles (20) mit in Abständen voneinander angeordneten Nocken (22) versehen ist, welche gegen die Anschlagfläche (17) in Innern der Tasche (13) im ersten Schenkel (11) des Profilstückes (10) anliegen.

7. Blechstück nach Anspruch 6, dadurch gekennzeichnet, dass die Nocken (22) an der zurückgeschlagenen Endpartie (21) einwärts vorspringen.

8. Verwendung von Profilstücken nach Anspruch 1 zum lösbaren Verbinden von aus Blechmaterial gebildeten Kanalabschnitten, insbesondere von Lüftungskanälen, dadurch gekennzeichnet, dass an jedem der zu verbindenen Kanalabschnitte eine Endpartie (21, 21') jeder Kanalwand (20, 20') um 180° nach aussen zurückgeschlagen und in die Tasche (13, 13') im ersten Schenkel (11, 11') eines der Profilstücke (10, 10') eingeschoben wird, und dass die mit den Profilstücken (10, 10') versehenen Kanalabschnitte stumpf aneinandergefügt und die durch den zweiten Schenkel (12, 12') der Profilstücke (10, 10') gebildeten Flansche paarweise miteinander verbunden werden.

9. Verwendung nach Anspruch 8, dadurch gekennzeichnet, dass nach Anspruch 3 oder 4 ausgebildete Profilstücke (10, 10') verwendet werden und dass an den in die Tasche (13, 13') im ersten Schenkel (11, 11') der Profilstücke (10, 10') einzuschiebenden Endpartien (21, 21') der Kanalwände (20, 20') jeweils mehrere in Abständen voneinander angeordnete Nocken

0135602

(22, 22') angeprägt und an der Anschlagfläche (17) im Innern der Tasche (13, 13') des jeweils betreffenden Profilstückes (10, 10') zur Anlage gebracht werden.

10. Verwendung nach Anspruch 9, dadurch gekennzeichnet, dass an den um 180$^{o}$ zurückgeschlagenen Endpartien (21, 21') der Kanalwände (20, 20') die Nocken (22, 22') einwärts geprägt werden.

0135602

1/2

Fig. 1

Fig. 3

Fig. 2

Fig. 4

Fig. 5

0135602

2/2

*Fig. 6*

19

12

18

110

11

17

15

14

11A   13   16

*Fig. 7*

19

12

18

210

11

17

15

14

11A   13   16

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-A-2 750 110  (SMITKA) <br> * Figuren 2,3 * | 1-4 | F 16 L 23/00 |
| Y |  | 5-10 | |
| Y | US-A-2 491 700  (ZWERLING) <br> * Figur 4 * | 5-10 | |

RECHERCHIERTE SACHGEBIETE (Int. Cl. 3)

F 16 L

Der vorliegende Recherchenbericht wurde für alle Patentansprüche erstellt.

| Recherchenort | Abschlußdatum der Recherche | Prüfer |
|---|---|---|
| DEN HAAG | 08-06-1984 | SCHAEFFLER C.A.A. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82